# EUROPEAN PATENT SPECIFICATION

(11) **EP 2 859 952 B1**
(45) Date of publication and mention of the grant of the patent: **14.06.2017**
(21) Application number: 14188686.1
(22) Date of filing: 13.10.2014
(51) Int. Cl.: B02C 23/36, B09B 3/00

(54) **Method and device for shredding waste**
Verfahren und Vorrichtung zum Zerkleinern von Abfall
Procédé et dispositif pour déchiqueter des déchets

(30) Priority: 11.10.2013 NL 2011600
(43) Date of publication of application: 15.04.2015
(73) Proprietor: Pharmafilter B.V., 1015 AE Amsterdam (NL)
(72) Inventor: Van den Berg, Eduardo Alexander, 1015 LH Amsterdam (NL)
(74) Representative: Hylarides, Paul Jacques

(56) References cited:
- DE-A1- 19 610 568
- JP-A- H0 679 188
- JP-A- H1 043 620
- US-B1- 6 351 858

## Description

The invention relates to a method and device for shredding a waste flow with solid constituents. The invention also relates to a system for treating a number of different waste flows in a building.

Large quantities of waste are produced in a building such as a care institution, (for instance a hospital or nursing home), an airport terminal and the like. A part of the waste can be discharged directly to the sewer system, but another part must first undergo a treatment or must be processed in an alternative manner. In care institutions the waste can for instance comprise urine and faeces collected via containers (chamber pots and urinals). It is usual to deposit the urine and faeces into a toilet and discharge them via the public sewer system, after which, following optional purification in a sewage treatment plant, they are discharged into the surface water. A drawback hereof is that the containers have to be cleaned separately, which is costly and labour-intensive and moreover increases the risk of contamination. A second drawback is that possible medicinal and/or toxic substances in the urine and/or faeces could pass into the surface water.

Described in the European patent EP 2 188 069 B1 is a waste treatment system in which different waste flows are processed by guiding the solid waste material through a number of shredding devices and subsequently cleaning the overall quantity of liquid waste and shredded solid waste. It is found in practice however that the shredding devices can result in nuisance. Depending on, among other factors, the quantity and properties of the solid waste material, for instance the containers in which liquid waste is temporarily stored, the shredding elements of the shredding devices produce a relatively high level of noise.

A further drawback of the known devices is that it has been found difficult to limit the odour nuisance resulting from the waste treatment system.

US 6 351 858 B1 discloses an apparatus for disposing of human waste. The apparatus comprises a housing having a container inlet for introducing a disposable container containing waste into the a crushing chamber. The apparatus comprises a rotary mill that has been placed in a soundproof chamber comprising a double wall filled with a soundproof material.

It is an object of the invention to provide a method and device of the type stated in the preamble in which at least one of the above stated drawbacks of the known shredding devices is reduced.

It is a further object of the invention to provide a device and method of the type stated in the preamble which also produces relatively little noise during use.

According to a first aspect of the invention, at least one of the objectives is at least partially achieved in a method for shredding a waste flow with solid constituents according to claim 1, the method comprising of:
- carrying the waste flow to a shredding device, the shredding device comprising a receiving space inside a housing, wherein a shredding unit with at least one shredding element is arranged in the housing;
- immersing the shredding element into the waste flow carried into the receiving space;
- shredding the solid constituents of the waste flow with the shredding element in the immersed state;
- discharging the waste flow from the housing.

Because the shredding element which performs the actual shredding operation, for instance a rotary shredder provided with protrusions, is partially or wholly immersed, the sound caused by the shredding and/or the vibrations caused thereby are damped to some extent. The noise nuisance for the surrounding area will hereby decrease. It is recommended to have the shredding element wholly immersed during shredding of the solid constituents of the waste flow. Some sound-reducing effect on the surrounding area can often already be realized however when only a part of the shredding element is immersed, particularly when the contact surface of the shredding element and the opposite surface in the housing (i.e. the surface where most of the noise is produced) remains below the liquid level.

In determined embodiments the waste flow comprises solid constituents as well as liquid constituents, wherein the solid constituents comprise containers. Liquid constituents are held in these containers. When the waste flow is generated for instance in a hospital, a container can be formed by a chamber pot or the like in which faeces and/or urine are held. The faeces and/or urine themselves form the liquid constituents, while the containers form the solid constituents. In these embodiments the method comprises of shredding the containers to container parts. These container parts are smaller than the original container. The shredding is preferably performed such that the container is shredded until the resulting container parts have reached a determined maximum size. The container parts are in other words smaller than a predetermined maximum value. This maximum value can vary, but is chosen in some embodiments such that transport of the container parts is possible via a conduit system with a liquid waste flow as medium. This means that the shredded container parts are easy to discharge via a conduit.

Said maximum value varies depending on the application. This maximum value is preferably equal to 5 cm, 1 cm or even 0.5 cm.

Whole or partial immersion of the shredding element can sometimes be realized solely by the waste flow itself (when there is a sufficiently large quantity of liquid waste relative to the quantity of solid constituents), although in the present invention immersion takes place in a combination of waste flow and supplementary liquid. The method then comprises of adding supplementary liquid to a housing filled with a quantity of waste flow until at least the shredding element is immersed in the mixture of waste flow and supplementary liquid. The supplementary liquid can be water (optionally of potable quality), although other liquids are also possible. Additives, for instance a cleaning agent, can be supplied to the liquid (for instance the water).

Filling the shredding device and processing the waste flow can take place in different ways. In the invention the method comprises of keeping a discharge conduit closed prior to feed and shredding. The housing fills with a quantity of waste flow, in combination with supplementary liquid, until a sufficiently high level is reached, and the shredding element is immersed therein. Once shredding has been completed, the whole content is discharged, for instance by opening a discharge conduit. A waste flow can in this way be processed batchwise and in efficient manner.

In order to ensure that at least the shredding element is immersed during the shredding by the shredding unit, the liquid level in the housing can be detected, for instance with one or more sensors. At a liquid level lower than a predetermined minimum liquid level supplementary liquid must be added until at least the minimum liquid level is reached. This can take place automatically in that a control unit coupled to the sensor regulates the feed of water, although manual filling of the housing is of course also possible.

In the invention the shredding device comprises a housing provided with at least one first inlet for introducing the waste flow, a second inlet for introducing supplementary liquid and at least one outlet for discharging the shredded waste flow with supplementary liquid, at least one shredding unit arranged in the housing and comprising a shredding element drivable via a drive motor and a control unit configured to control at least the second inlet, the discharge and the shredding unit. When such a shredding device is applied, the method can comprise the following steps of:
- opening the first inlet for arranging a quantity of waste flow in the housing;
- opening the second inlet for mixing the waste flow with supplementary water;
- shredding the mixture of waste flow and supplementary water with an immersed shredding element; and
- discharging the shredded waste flow via the outlet of the housing. The method can herein comprise of first adding supplementary water and then supplying waste, first supplying waste and then adding supplementary water or adding supplementary water while supplying waste.

In a further embodiment the method comprises of pressing the solid constituents of the waste flow against the shredding element with a pressing unit. This pressing can take place before and/or during the actual shredding and has the main purpose of effecting a quick and efficient shredding process.

In an advantageous embodiment the method comprises of:
- determining the liquid level in the housing;
- comparing the liquid level to a minimum liquid level, wherein the minimum liquid level preferably corresponds to a level at which the shredding element is immersed;
- shredding the waste flow only when the minimum liquid level is reached.

When the level is too low, supplementary liquid is first added until a determined minimum level has been obtained. Only then is the shredding element activated by switching on the drive motor.

The waste flow can further be stirred before, during and/or after shredding with the intention of holding the optionally shredded solid constituents as far as possible in suspension in order to assist in proper shredding of the waste flow, to reduce the risk of sediment forming in the housing, formed for instance by shredded solid constituents, and/or to improve the discharge of the shredded waste flow.

According to a second aspect of the invention, at least one of the objectives is at least partially achieved in a device for shredding a waste flow with solid constituents according to claim 10, the device comprising:
- a housing provided with at least one first inlet for introducing the waste flow, a second inlet for introducing supplementary liquid and at least one outlet for discharging the shredded waste flow with supplementary liquid;
- at least one shredding unit arranged in the housing and comprising a shredding element drivable via a drive motor;
- a control unit configured to control at least the second inlet, the outlet and the shredding unit for the purpose of first immersing the shredding element in the mixture of waste flow and supplementary liquid, to subsequently activate the shredding unit for the purpose of shredding the waste flow with the shredding unit in immersed state and, as soon as the waste flow has been shredded, to discharge the shredded waste flow via the outlet of the housing. In the invention the outlet comprises a discharge conduit for discharging the shredded waste flow and supplementary liquid. This conduit can comprise a closing mechanism to be operated via the control unit for the purpose of opening and closing the outlet. In a further embodiment the device comprises a supplementary liquid feed conduit, for instance a water conduit, for feeding supplementary liquid under pressure, and a valve mechanism controllable via the control unit for regulating the feed of the supplementary liquid to the housing.

The shredding unit comprises one or more shredding elements arranged rotatably in the housing. The shredding element comprises one or more protrusions for shredding the solid constituents.

In order to improve the quality of the shredding, a pressing unit is provided in some embodiments for pressing solid constituents of the waste flow against the surface of the shredding element during the shredding. This pressing unit can for instance be embodied as a press displaceable in the housing. When the solid constituents have been arranged in the housing, the press presses these parts in the direction of the shredding element. At a given moment the press is moved back again to its starting position. The shredded waste is then discharged or one or more further pressing steps take place.

In an embodiment of the invention the device comprises a liquid level determining unit for determining the liquid level in the housing, wherein the liquid level determining unit is coupled to the control unit for controlling the second inlet and/or the shredding unit subject to the current liquid level in the housing. The control unit can for instance be embodied (programmed) to activate the shredding unit only when the shredding unit is wholly immersed. When the level is too low, supplementary liquid must first be added until a determined minimum level is obtained, and only then can the shredding unit be switched on. In other cases, for instance when there is a sufficiently high liquid level after the device has been filled with waste, the shredding unit can be switched on immediately.

According to a third aspect of the invention, at least one of the objectives is at least partially achieved in a system according to claim 16 for treating a number of waste flows in a building, in particular a care institution, aircraft or airport terminal, wherein a waste flow at least comprises solid constituents as well as liquid constituents, wherein the solid constituents comprise containers in which liquid constituents are held, the system comprising:
a conduit system with a number of inlets to be disposed at different locations in the building and connected to at least one outlet to the sewer system;
one or more shredding devices, wherein a shredding device is configured to shred the solid constituents of a waste flow;
wherein the outlet of a shredding device is connected to a separating device for separating actual waste materials and container materials from the shredded waste flow, wherein a purification installation is connected to the outlet of the separating device for the actual waste material.

Although the invention will be described on the basis of specific embodiments, the invention is not limited to the shown embodiments. The invention is described with reference to measures wherein explicit advantages can be stated but wherein implicit advantages may also apply. The subject-matter of the invention of this application can relate to each of these measures, some combinations of which are described and/or shown explicitly in this description, but may also be described implicitly. Although the drawings show explicit combinations of measures, it will be apparent to the skilled person that a number of the measures can also be taken separately of each other.

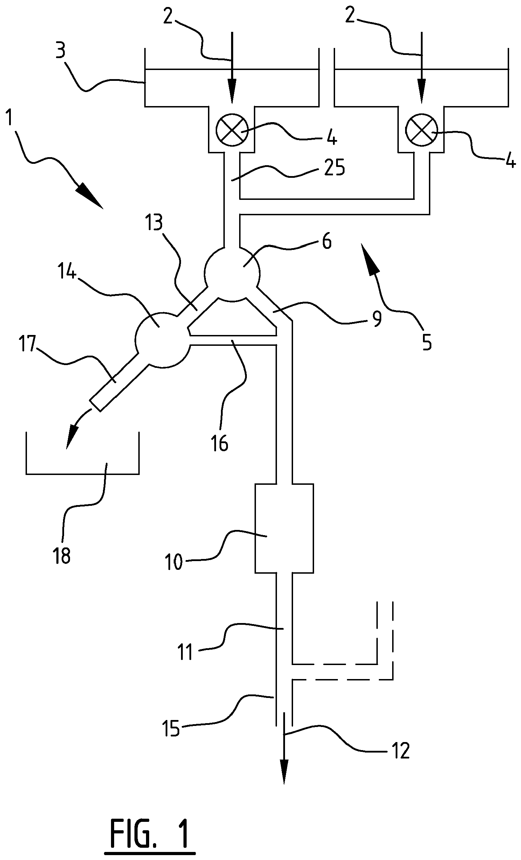

The invention will be further elucidated hereinbelow with reference to a number of exemplary embodiments, wherein
Fig. 1 is a schematic view of a first variant of an assembly according to the invention for use with non-biodegradable containers;
Fig. 1 is a schematic view of a second variant of the assembly according to the invention for use with biodegradable containers; and
Fig. 3 is a schematic view of an exemplary embodiment of a shredding device according to the invention.

Designated with 1 in fig. 1 is a first variant of the system according to the present invention. Such a system is preferably applied in a building such as a care institution (for instance a hospital, nursing home or home for the elderly), an airport terminal, office building, stadium and the like, where waste flows are generated at many separate locations. These waste flows are to greater or lesser extent liquid here, so that they can be discharged via a conduit system, for instance to the public sewer system. Solid substances (such as particles of diverse dimensions, objects) can also be present in the waste flows in addition to the liquid substances.

In the course of care in a care institution waste such as faeces and the like are for instance generated, and this waste can be discharged including the container (chamber pot) in which the waste is presented. The waste flow consists here of a solid substance (the container) and a liquid substance (the faeces). In the case of an airport the waste flow can also consist of solid substances (for instance food packagings and the like) and liquid substances (such as faeces, flushing water and the like).

Figure 1 shows an embodiment of a waste treatment system 1 provided with a number of inlet units 2 where the waste can be presented. The inlet units are situated at different locations in the building, for instance in all bathrooms of a care institution. Shown in the figure are two inlet units, although this number can of course also be smaller or (much) greater. An inlet unit 2 comprises in the shown embodiment a housing 3 in which a shredding device 4 is arranged. This shredding device 4 is provided in the inlet unit for the purpose of fine shredding of possible solid substances in the waste. As alternative or in addition to the inlet units with shredding devices, inlet units can also be realized in which such a shredding device is not arranged. In these embodiments the waste is shredded elsewhere (so outside the inlet unit) or a shredding process is not necessary, for instance in the case of a waste flow without solid substances. Each of the inlet units 2 is coupled to a shared conduit system 5 along which the waste is discharged and in which it can optionally be further processed. The term "conduit" is understood here to mean any form of tube, shaft, duct, pipe and so on suitable for enabling transport of the waste.

Situated immediately downstream of inlets 2 is a shredding device 4. Following shredding the waste can be displaced in simple manner through a conduit system. Preferably present is a central separating device 6 into which different inlets debouch. In this separating device separation takes place between the actual waste (faeces and the like) and the solid substance, for instance the container material of the shredded containers. The actual waste is fed via a conduit 9 to a purification installation 10. The liquid part of the waste fed via conduit 9 (consisting largely of water) is purified in purification installation 10 and subsequently discharged via discharge conduit 11 to sewer system 12. This waste flow can be clean such that it can optionally be reused.

The waste flow with solid substance, for instance with shredded container material, separated in separating device 6 is guided via a conduit 13 to a cleaning device 14. Cleaning of the container material can take place using a cleaning fluid, for instance flushing water which may for instance be the flushing water made available at outlet 15. Cleaning device 6 is further embodied to perform a separation between the cleaned solid substance and the fluid (for instance flushing water) used for the cleaning. This fluid is fed via conduit 16 back to purification installation 10. The cleaned solid substance (for instance the cleaned container material) is discharged via outlet 17, for instance to a receiving unit 18. The received solid substance can then be discharged, for instance for reuse thereof.

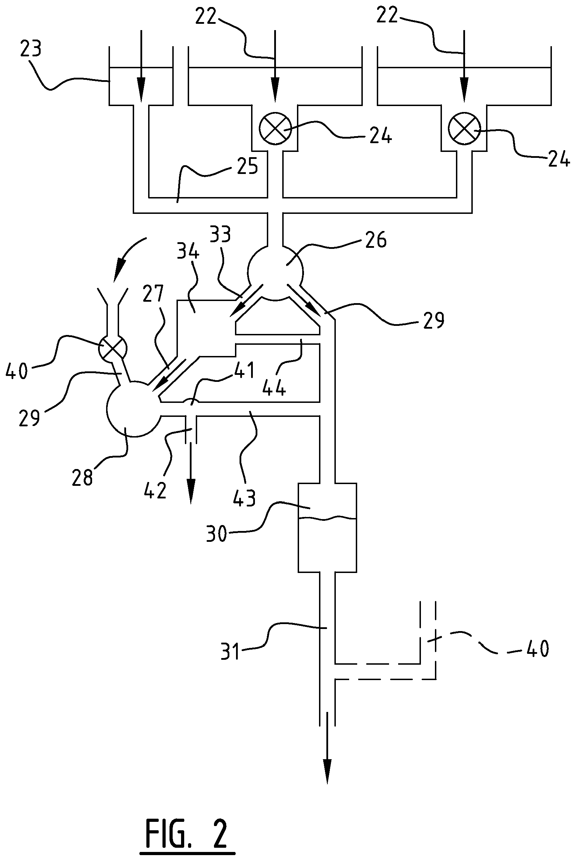

Fig. 2 shows a variant of the system according to the invention. The system as a whole is designated here with 21 and waste is fed via inlet units 22 or 23 and discharged via a conduit system 25. The waste flows of the different inlet units are generated in the same manner as described with reference to fig. 1. Inlet units 22 correspond to the inlet units 2 shown in fig. 1. Inlet units 23 are units via which a waste flow can be discharged which does not require shredding, for instance when the waste flow consists of shower water.

In contrast to the above described situation, waste flow in fig. 2 comprises of, among other materials, a solid substance which is biodegradable. In the waste flows the material of the containers to be shredded can for instance consist of biodegradable types of material, such as paper-like types of material, biodegradable plastics such as PLA plastics and the like. These are shredded in the above described manner in a shredding device 24 and fed centrally to a separating device 26 where separation once again takes place between the actual waste flow (via conduit 29) and the container material (via conduit 33). The actual waste flow is fed to a purification installation 30 and the water becoming available here is discharged via outlet 31 for possible reuse.

The biodegradable solid substance made available in separating device 26 (for instance - though not limited thereto - the shredded container material) is first cleaned in the above described manner in cleaning device 34. Here too the fluid (for instance flushing water) used which may come from outlet 40 is again fed to purification installation 34. Via conduit 44 the liquid part of the waste flow can be discharged in the direction of purification installation 30, while the cleaned container material is fed via conduit 27 to a fermenter 28. A further waste flow, such as kitchen waste, can likewise be fed to this fermenter 28 via inlet 29 and a further shredding device 40.

Heat/gas is released during the fermentation in fermenter 28. This heat/gas can be used to heat fermenter 28 and/or to generate energy in order to enhance the degradation process and the conditions for the micro-organisms in the fermenter. The solid/liquid waste flow is fed to separator 41. Here hard components are filtered out and discharged for composting purposes 42. A heating step optionally also takes place in order to eliminate possible bacteria in the hard components through heating. The softer components including liquid are fed via conduit 43 to the purification installation.

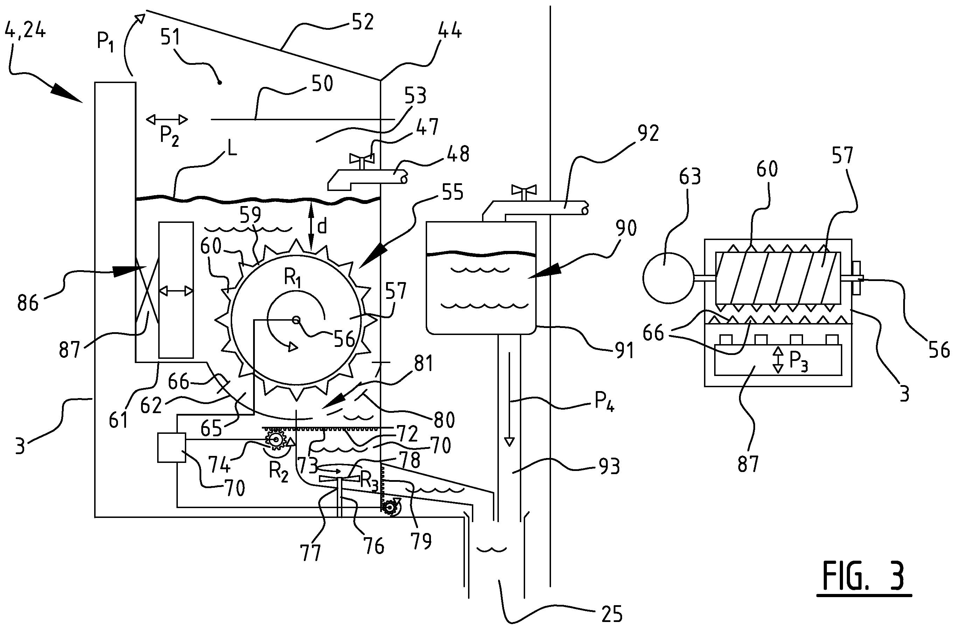

Fig. 3 shows an exemplary embodiment of a shredding device 4,24 according to the invention. The figure shows a housing 3 disposed in a space in the building (not shown). A closing mechanism 52 is provided on the upper side of housing 3. Closing mechanism 52 is arranged on housing 3 via a hinge 49 and can be pivoted manually up or downward (direction P₁) by a user in order to gain access to a temporary waste collection space 51. Waste collection space 51 is bounded on the underside by a second closing mechanism 50 which extends some distance below closing mechanism 52 (in the closed position). Second mechanism 50 can be slid back and forth (direction P₂) via an electric drive (not shown) in order to provide access to the internal mechanism 53 of the shredding device. It is only when the user presents his/her waste that he/she opens this first mechanism 52 and places the waste on second mechanism 50. Avoided in this way is that the user can gain direct access to the inner space 53 of the shredding device, something which could lead to hazardous situations.

Once first mechanism 52 has been closed, second mechanism 52 is opened and the waste drops into the inner space 53. Inner space 53 can be filled with water via a water supply 48 connected for instance to the domestic water main. Provided for this purpose is a control valve 47 which can be manually and/or electrically (remotely) operated. A shredding unit 55 is provided in the lower part of inner space 53. Shredding unit 55 comprises a shredding element 57 mounted rotatably on a central shaft 56. Shredding element 57 can be driven via an electric drive motor 63. Drive motor 63 is normally disposed outside inner space 53 and is suitable for rotating drive element 57 in at least one rotation direction (R₁).

A large number of protrusions 60 are provided on the curved outer surface 59 of shredding element 57. The bottom 61 of inner space 53 has a curved bottom part 62 at the position of shredding element 57. Bottom part 62 is embodied here such that between outer surface 59 of shredding element 57 and bottom part 62 there extends a channel 65, the height of which is more or less constant. In other words, the curvature of bottom part 62 is adapted to the curvature of shredding element 57. Protrusions 66 are likewise arranged on the curved bottom part 62. These protrusions have a shape which is preferably complementary to that of protrusions 60. The spacing between protrusions 66 is further adapted to the spacing between protrusions 60. An area can hereby be created between shredding element 57 and the bottom of housing 3 where the waste can be shredded between the shredding element and the bottom.

In the shown embodiment protrusions 60 on the shredding element and protrusions 66 on the bottom extend substantially helically. The solid part of the waste can hereby not only be shredded but also displaced in one determined direction, for instance in the direction of the outlet.

In the shown embodiment drive motor 63 of shredding unit 55 can be controlled by a central control unit 70. This central control unit 70 can likewise be connected to control valve 47 of water supply 48. Control unit 70 ensures that via water supply 48 the water level L in inner space 53 is always high such that shredding unit 55, and more particularly shredding element 57, is always situated partially, and preferably even wholly, under the water level.

In some embodiments of the invention the waste is first arranged in an empty inner space 53 and inner space 53 is subsequently filled to the desired level via feed 54. In other embodiments a quantity of water is already present in inner space 53 and the waste is added to the water already available. Shredding unit 55 is in both cases wholly immersed in the water. In determined embodiments control unit 70 is configured to arrange a more or less fixed minimum quantity of water at a time in inner space 53 via supply 48. This minimal quantity must be sufficient to always set the water level above the shredding unit. In other embodiments use is made of a water level sensor (not shown). This sensor generates a sensor signal representative of the current water level. Control unit 70 can determine on the basis of the sensor signal whether or not water still has to be added via the supply.

Further provided on the underside of inner space 53 are two mutually connected discharge channels 70,71. Discharge channel 70 can be closed using a closing mechanism 72. In the shown embodiment closing mechanism 72 is a lying mechanism which is embodied as pinion. A toothed wheel 74 engaging on the pinion can be rotated (direction R₂) via a drive motor (not shown) in order to thus open or close closing mechanism 72 as required. The drive motor can be controlled here by control unit 70 which can open the closing mechanism for instance once the waste has been shredded to sufficiently fine extent.

When closing mechanism 72 is opened the mixture of water and shredded waste flows via channel 70 and channel 71 into a discharge conduit 25. In order to ensure that the shredded waste material in channel 70 does not tend to begin settling, in a determined embodiment an (optional) stirring mechanism 76 is arranged. The stirring mechanism comprises a shaft 77 with a number of rotatable stirring elements 78 (direction R₃) which can hold the solid shredded waste material in suspension and prevent deposition thereof.

In the embodiment shown in fig. 3 the device is provided with a second closing mechanism 79. This closing mechanism can be opened and closed as required via a drive motor (not shown) coupled to control unit 70.

In order to ensure that excessively large parts of the waste material do not enter channel 70 a determined embodiment can be further provided with a screen 80. Screen 80 has a curved form adapted to the form of the bottom. The screen can further be arranged just above the entrance opening of channel 70. Screen 80 preferably takes a curved form here so that a narrow channel 81 remains available between the screen and the outer surface of the shredding element. Owing to the presence of channel 81 waste material which may not have been properly shredded is once again dispersed through the inner space. At a given moment this dispersed waste material will once again move between protrusions 60, 66 of the shredding unit and undergo a further shredding step.

In order to improve the shredding performance of the shredding unit an (optional) pressing unit 86 can be provided in determined embodiments. This pressing unit 86 comprises a pressing element 87 which is displaceable transversely (direction P₃) toward shredding unit 57. This displacement takes place with a drive mechanism 87. When the waste material has been arranged in inner space 53 and the shredding unit is switched on, pressing element 87 can at a given moment be displaced slowly in the direction of shredding unit 57 in order to press the waste material against the protrusions of the shredding unit so as to thus obtain an improved shredding.

The distance between the upper side of shredding unit 55 and the water level L (distance a) can vary. It has been found that, in order to obtain a good sound-insulating effect, the distance must amount to at least 1 cm, preferably at least 5 cm, still more preferably at least 10 cm. Further shown is that the water level L is located above pressing unit 86. This need not be so in all cases. At the position of the contact between pressing unit 86 and shredding unit 57, both units must be underwater. This means that a part of shredding element 57 and/or pressing element 87 can extend above water level L. Preferably however, both units are wholly immersed in order to ensure an even better insulation.

Further provided in the embodiment shown in fig. 3 is an additional water supply provision 90. This provision comprises a water reservoir 91 which can be filled via a water feed 92. When closing mechanism 72 and/or closing mechanism 79 are opened and the waste material is discharged via channels 70, 71, a part of the water stored in reservoir 91 can be discharged via a channel 93 (direction P₄) so that a good flow of the waste material through discharge conduit 27 can be realized.

In the above described embodiments the shredding device comprises a control unit 70 which can operate the different closing mechanisms, shredding unit 55, pressing unit 86 and water supply 54. In other embodiments which do not fall under the scope of the appended claims, one or more of these components of the system can however only be operated by hand. This does not of course change the operating principle of the shredding device. In other embodiments there is a control unit configured to control two or more shredding devices instead of one control unit per shredding device.

The described constructions of the shredding devices enable good shredding of the waste material without a great deal of noise being produced. By holding the shredding unit immersed the chance of a malodorous gases being released, for instance gases from discharge conduit 25, is extremely small. This is particularly important in the case of cleaning systems wherein the shredding device is located in the rooms of a building which are in use and the shredding of the waste material would otherwise cause nuisance to the users of these rooms.

The present invention is not limited to the embodiments thereof described herein. The rights sought are defined by the following claims.

## Claims

1. Method for shredding a waste flow in a shredding device comprising a housing (3) provided with at least one first inlet for introducing the waste flow, a second inlet for introducing supplementary liquid and at least one outlet (71) comprising a discharge conduit for discharging the shredded waste flow with supplementary liquid from the housing, and a shredding unit with at least one shredding element (57) arranged in the housing for shredding the waste flow, wherein the waste flow at least comprises solid constituents as well as liquid constituents, the method comprising controlling the second inlet, the shredding element (57) and the outlet (71) so as to:
- introduce the waste flow and supplementary liquid into the housing while keeping the discharge conduit closed in order to fill the housing to a sufficiently high level so that the shredding element is at least partially immersed in the mixture of liquid constituents, solid constituents and supplementary liquid;
- subsequently shred the solid constituents of the waste flow with the shredding element (57) in the at least partially immersed state;
- as soon as the waste flow has been shredded, open the at least one outlet (71) and discharge the waste flow from the housing to a sewer system (12).

2. Method as claimed in claim 1, wherein the second inlet and discharge conduit are controlled so as to have the shredding element wholly immersed during shredding.

3. Method as claimed in claim 1 or 2, wherein following discharge of the shredded waste flow from the housing the method comprises of:
- separating the shredded waste flow into actual waste material and container material;
- carrying the separated actual waste material to a purification installation (10,30) for purifying the separated actual waste material;
- carrying the purified, separated actual waste material to the sewer system (12).

4. Method as claimed in any of the preceding claims, wherein the solid constituents comprise containers in which liquid constituents are held, the method comprising of shredding the containers to container parts, wherein the shredding to container parts preferably comprises of shredding a container to container parts which are smaller than a predetermined maximum value, wherein the container part size is preferably such as to enable transport of the container parts via a conduit system with a liquid waste flow as medium and/or wherein the maximum value of the container part size is preferably equal to 5 cm, preferably equal to 1 cm, still more preferably equal to 0.5 cm.

5. Method as claimed in any of the foregoing claims, comprising of detecting the liquid level in the housing (3) and, at a liquid level lower than a predetermined minimum liquid level, feeding supplementary liquid until at least the minimum liquid level is reached.

6. Method as claimed in any of the preceding claims, wherein the shredding device comprises at least one shredding unit (55) arranged in the housing and comprising a shredding element (57) drivable via a drive motor and a control unit (70) configured to control at least the second inlet, the discharge conduit and the shredding unit (55), the method comprising of:
- opening the first inlet for arranging a quantity of waste flow in the housing and opening the second inlet for mixing the waste flow with supplementary water, while keeping the discharge conduit closed;
- shredding the mixture of waste flow and supplementary water with an immersed shredding element; and
- opening the discharge conduit and discharging the shredded waste flow via the outlet (71) of the housing (3).

7. Method as claimed in any of the preceding claims, comprising of pressing the solid constituents of the waste flow against the shredding element with a pressing unit (86), and/or:
- determining the liquid level in the housing;
- comparing the liquid level to a minimum liquid level, wherein the minimum liquid level preferably corresponds to a level at which the shredding element is immersed;
- shredding the waste flow only when the minimum liquid level is reached.

8. Method as claimed in any of the preceding claims, comprising of stirring the waste flow, and optionally the mixture of waste flow and supplementary liquid, before, during and/or after shredding.

9. Method as claimed in any of the preceding claims, wherein the waste flow comprises a mixture of solid constituents and liquid constituents, particularly comprising a first waste flow comprising at least substantially faeces and urine and a second waste flow comprising waste substantially comprising medicinal and/or toxic substances arranged in a container for shredding.

10. Device for shredding a waste flow, wherein the waste flow at least comprises solid constituents as well as liquid constituents, the device comprising:
- a housing (3) provided with at least one first inlet (51) for introducing the waste flow, a second inlet (48) for introducing supplementary liquid and at least one outlet (71) for discharging the shredded waste flow with supplementary liquid, wherein the outlet (71) comprises a discharge conduit for discharging the shredded waste flow and supplementary liquid and is connected or connectable to a conduit system (25) connected to the sewer system (12);
- at least one shredding unit (55) arranged in the housing (3) and comprising a shredding element (57) drivable via a drive motor (63);
- a control unit (70) configured to control at least the second inlet (48), the outlet (71) and the shredding unit (55), **characterized in that** the control unit is configured so as to
- open the second inlet while keeping the discharge conduit closed in order to fill the housing to a sufficiently high level so that the shredding element (57) is at least partially immersed in the mixture of liquid constituents, solid constituents and supplementary liquid,
- subsequently activate the shredding unit (55) for the purpose of shredding the solid constituents of the waste flow with the shredding element (57) in at least partially immersed state; and
- as soon as the waste flow has been shredded, open the discharge conduit so as to discharge the shredded waste flow via the outlet (71) of the housing (3).

11. Device as claimed in claim 10, wherein the control unit is configured to have the shredding element (57) in wholly immersed state when the shredding element is shredding the waste flow.

12. Device as claimed in either of the claims 10 or 11, wherein the second inlet comprises:
- a supplementary liquid feed conduit for feeding supplementary liquid under pressure;
- a valve mechanism controllable via the control unit (70) for regulating the feed of the supplementary liquid to the housing (3).

13. Device as claimed in any of the claims 10-12, wherein the shredding unit (55) comprises a shredding element (57) arranged rotatably in the housing, wherein the shredding element comprises a protrusion (60) for shredding the solid constituents, more preferably comprising a pressing unit (86), in particular a press arranged displaceably in the housing, for pressing solid constituents of the waste flow against the surface of the shredding element during the shredding.

14. Device as claimed in any of the claims 10-13, comprising a liquid level determining unit for determining the liquid level in the housing (3), wherein the liquid level determining unit is coupled to the control unit (70) for controlling the second inlet and/or the shredding unit (55) subject to the current liquid level in the housing, more preferably comprising:
- a stirring unit (76) arranged in the housing for stirring the waste flow.

15. Device as claimed in any of claims 10-14, wherein the discharge conduit comprises a closing mechanism that is configured to be operated via the control unit for the purpose of opening and closing the outlet (71).

16. System (1) for treating a number of waste flows in a building, in particular a care institution, aircraft or airport terminal, wherein a waste flow at least comprises solid constituents as well as liquid constituents, wherein the solid constituents comprise containers in which liquid constituents are held, the system comprising:
a conduit system (25) with a number of inlets (2) to be disposed at different locations in the building and connected to at least one outlet to the sewer system (12);
one or more devices (4) as claimed in any of the claims 10-15, wherein a device is configured to shred the solid constituents of a waste flow;
wherein the outlet of a shredding device (4) is connected to a separating device (26) for separating actual waste materials and container materials from the shredded waste flow, wherein a purification installation (10,30) is connected to the outlet of the separating device (26) for the actual waste material,
wherein the separating device preferably comprises a further outlet for discharging the container materials, which outlet is connected to a cleaning device for cleaning the separated container material with a cleaning fluid, and/or
wherein the cleaning device is preferably provided with a first outlet for discharging the used cleaning fluid to the purification installation (10,30) and a second outlet for discharging the separated and cleaned container material,
wherein a fermenter (28) is preferably connected to the second outlet of the separating device for the container materials.

## Patentansprüche

1. Verfahren zum Zerkleinern eines Abfallstroms in einer Zerkleinerungsvorrichtung, die ein Gehäuse (3) umfasst, das mit wenigstens einem ersten Einlass, zum Einbringen des Abfallstroms, einem zweiten Einlass, zum Einbringen von Zusatzflüssigkeit und wenigstens einem Auslass (71) ausgestattet ist, der eine Ausgangsleitung zum Auslassen des zerkleinerten Abfallstroms mit der Zusatzflüssigkeit aus dem Gehäuse, und eine Zerkleinerungseinheit mit wenigstens einem Zerkleinerungselement (57), das in dem Gehäuse zum Zerkleinern des Abfallstroms angeordnet ist, umfasst, wobei der Abfallstrom wenigstens feste Bestandteile sowie flüssige Bestandteile umfasst, wobei das Verfahren Steuern des zweiten Einlasses, des Zerkleinerungselements (57) und des Auslasses (71) umfasst, um:
- den Abfallstrom und Zusatzflüssigkeit in das Gehäuse einzubringen, während die Ausgangsleitung geschlossen gehalten wird, um das Gehäuse bis zu einem ausreichend hohen Niveau zu füllen, so dass das Zerkleinerungselement wenigstens teilweise in das Gemisch aus flüssigen Bestandteilen, festen Bestandteilen und Zusatzflüssigkeit eingetaucht ist;
- anschließend die festen Bestandteile des Abfallstroms mit dem Zerkleinerungselement (57) in dem wenigstens teilweise eingetauchten Zustand zu zerkleinern;
- sobald der Abfallstrom zerkleinert worden ist, den wenigstens einen Auslass (71) zu öffnen und den Abfallstrom von dem Gehäuse in ein Abwassersystem (12) auszulassen.

2. Verfahren nach Anspruch 1, wobei der zweite Einlass und die Ausgangsleitung so gesteuert werden, dass das Zerkleinerungselement während des Zerkleinerns vollständig eingetaucht ist.

3. Verfahren nach Anspruch 1 oder 2, wobei das Verfahren nach dem Auslassen des zerkleinerten Abfallstroms aus dem Gehäuse umfasst:
- Trennen des zerkleinerten Abfallstroms in tatsächliches Abfallmaterial und B ehältermaterial;
- Befördern des abgetrennten aktuellen Abfallmaterials zu einer Reinigungsanlage (10, 30) zum Reinigen des getrennten Abfallmaterials;
- Befördern des gereinigten, getrennten aktuellen Abfallmaterials zu dem Abwassersystem (12).

4. Verfahren nach einem der vorstehenden Ansprüche, wobei die festen Bestandteile Behälter umfassen, in denen flüssige Bestandteile gehalten werden, wobei das Verfahren Zerkleinern der Behälter in Behälterteile umfasst, wobei das Zerkleinern der Behälterteile vorzugsweise Zerkleinern eines Behälter in Behälterteile umfasst, die kleiner sind als ein vorbestimmter Maximalwert, wobei die Behälterteilegröße vorzugsweise so ist, um den Transport der Behälterteile über ein Leitungssystem mit einem flüssigen Abfallstrom als Medium zu ermöglichen und/oder wobei der Maximalwert der Behälterteilegröße vorzugsweise 5 cm beträgt, vorzugsweise 1 cm beträgt, noch bevorzugter 0.5 cm beträgt.

5. Verfahren nach einem der vorstehenden Ansprüche, umfassend das Messen eines Flüssigkeitsniveaus in dem Gehäuse (3) und, an einem Flüssigkeitsniveau das niedriger ist als ein vorbestimmtes minimales Flüssigkeitsniveau, das Zuführen von Zusatzflüssigkeit bis wenigstens das minimale Flüssigkeitsniveau erreicht ist.

6. Verfahren nach einem der vorstehenden Ansprüche, wobei die Zerkleinerungsvorrichtung wenigstens eine Zerkleinerungseinheit (55) umfasst, die in dem Gehäuse angeordnet ist, und ein Zerkleinerungselement (57) umfasst, das über einen Antriebsmotor antreibbar ist sowie eine Steuereinheit (70), die konfiguriert ist, wenigstens den zweiten Einlass, die Ausgangsleitung und die Zerkleinerungseinheit (55) zu steuern, wobei das Verfahren umfasst:
- Öffnen des ersten Einlasses, zum Anordnen einer Menge des Abfallstroms in dem Gehäuse und Öffnen des zweiten Einlasses, zum Mischen des Abfallstroms mit zusätzlichem Wasser, während die Ausgangsleitung geschlossen gehalten bleibt;
- Zerkleinern des Gemisches des Abfallstroms und des zusätzlichen Wassers mit einem eingetauchten Zerkleinerungselement; und
- Öffnen der Ausgangsleitung und Auslassen des zerkleinerten Abfallstroms über den Auslass (71) des Gehäuses (3).

7. Verfahren nach einem der vorstehenden Ansprüche, umfassend das Pressen der festen Bestandteile des Abfallstroms gegen das Zerkleinerungselement mit einer Presseinheit (86) und/oder:
- Bestimmen des Flüssigkeitsniveaus in dem Gehäuse,
- Vergleichen des Flüssigkeitsniveaus mit einem minimalen Flüssigkeitsniveau, wobei das minimale Flüssigkeitsniveau vorzugsweise einem Niveau entspricht, bei dem das Zerkleinerungselement eingetaucht ist;
- Zerkleinern des Abfallstroms, nur, wenn das minimale Flüssigkeitsniveau erreicht ist.

8. Verfahren nach einem der vorstehenden Ansprüche, umfassend das Rühren das Abfallstroms und wahlweise des Gemisches aus Abfallstrom und der Zusatzflüssigkeit, vor, während und/oder nach dem Zerkleinern.

9. Verfahren nach einem der vorstehenden Ansprüche, wobei der Abfallstrom ein Gemisch aus festen Bestandteilen und flüssigen Bestandteilen umfasst, insbesondere umfassend, einen ersten Abfallstrom, der wenigstens im Wesentlichen Fäkalien und Urin umfasst und einen zweiten Abfallstrom, der Abfälle umfasst, die im Wesentlichen medizinische und/oder giftige Stoffe umfasst, die in einem Behälter zum Zerkleinern angeordnet sind.

10. Vorrichtung zum Zerkleinern eines Abfallstroms, wobei der Abfallstrom wenigstens feste Bestandteile sowie flüssige Bestandteile umfasst, wobei die Vorrichtung umfasst:
- ein Gehäuse (3), das mit wenigstens einem ersten Einlass (51), zum Einbringen des Abfallstroms, einem zweiten Einlass (48), zum Einbringen von Zusatzflüssigkeit und wenigstens einem Auslass (71), zum Auslassen des zerkleinerten Abfallstroms und der Zusatzflüssigkeit versehen ist, wobei der Auslass (71) eine Ausgangsleitung zum Auslassen des zerkleinerten Abfallstroms und Zusatzflüssigkeit umfasst und mit einem Leitungssystem (25) verbunden oder verbindbar ist, das mit dem Abwassersystem (12) verbunden ist;
- wenigstens eine Zerkleinerungseinheit (55), die in dem Gehäuse (3) angeordnet ist und ein Zerkleinerungselement (57) umfasst, das über einen Antriebsmotor (63) antreibbar ist,
- eine Steuereinheit (70), die konfiguriert ist, wenigstens den zweiten Einlass (48), den Auslass (71) und die Zerkleinerungseinheit (55) zu steuern, **dadurch gekennzeichnet, dass** die Steuereinheit so konfiguriert ist, um
- den zweiten Einlass zu öffnen, während die Ausgangsleitung geschlossen gehalten bleibt, um das Gehäuse bis zu einem ausreichend hohen Niveau zu füllen, so dass das Zerkleinerungselement (57) wenigstens teilweise in das Gemisch aus flüssigen Bestandteilen, festen Bestandteilen und Zusatzflüssigkeit eingetaucht ist;
- anschließend die Zerkleinerungseinheit (55) zum Zwecke des Zerkleinerns der festen Bestandteile des Abfallstroms mit dem Zerkleinerungselement (57), in dem wenigstens teilweise eingetauchten Zustand zu aktivieren, und
- sobald der Abfallstrom zerkleinert worden ist, die Ausgangsleitung zu öffnen,
um den zerkleinerten Abfallstrom über den Auslass (71) des Gehäuses (3) auszulassen.

11. Vorrichtung nach Anspruch 10, wobei die Steuereinheit konfiguriert ist,
das Zerkleinerungselement (57) in vollständig eingetauchten Zustand zu haben, wenn das Zerkleinerungselement den Abfallstrom zerkleinert.

12. Vorrichtung nach einem der Ansprüche 10 oder 11, wobei der zweite Einlass umfasst:
- eine Zusatzflüssigkeits-Zuleitung zum Zuführen von Zusatzflüssigkeit unter Druck
- einen über die Steuereinheit (70) steuerbaren Ventilmechanismus zur Regelung der Zuführung der Zusatzflüssigkeit zu dem Gehäuse (3).

13. Vorrichtung nach einem der Ansprüche 10-12, wobei die Zerkleinerungseinheit (55) ein drehbar in dem Gehäuse angeordnetes Zerkleinerungselement (57) umfasst, wobei das Zerkleinerungselement einen Fortsatz (60) zum Zerkleinern der festen Bestandteile umfasst, besonders bevorzugt eine Presseinheit (86) umfasst, insbesondere eine in dem Gehäuse versetzbare Presse zum Pressen von festen Bestandteilen des Abfallstroms gegen die Oberfläche des Zerkleinerungselements während des Zerkleinerns.

14. Vorrichtung nach einem der Ansprüche 10-13, umfassend eine Flüssigkeitsniveau-Bestimmungseinheit zur Bestimmung des Flüssigkeitsniveaus in dem Gehäuse (3), wobei die Flüssigkeitsniveau-Bestimmungseinheit mit der Steuereinheit (70) zur Steuerung des zweiten Einlasses und/oder der Zerkleinerungseinheit (55) gekoppelt ist, in Abhängigkeit von dem gegenwärtigen Flüssigkeitsniveau in dem Gehäuse, besonders bevorzugt umfassend:
- eine in dem Gehäuse angeordnete Rühreinheit (76) zum Rühren des Abfallstroms.

15. Vorrichtung nach einem der Ansprüche 10-14, wobei die Ausgangsleitung einen Schließmechanismus umfasst, der konfiguriert ist, dass er über die Steuereinheit zum Zwecke des Öffnens und Schließens des Auslasses (71) betreibbar ist.

16. System (1) zur Behandlung einer Anzahl von Abfallströmen in einem Gebäude, insbesondere einer Pflegeeinrichtung, Flugzeug oder Flughafenterminal, wobei ein Abfallstrom wenigstens feste Bestandteile sowie flüssige Bestandteile umfasst, wobei die festen Bestandteile Behälter umfassen, in denen flüssige Bestandteile gehalten werden, wobei das System umfasst:
ein Leitungssystem (25) mit einer Anzahl von Einlässen (2), die an verschiedenen Stellen in dem Gebäude angeordnet und mit wenigstens einem Auslass mit dem Abwassersystem (12) verbunden sind;
einen oder mehrere Vorrichtungen (4) nach einem der Ansprüche 10-15, wobei eine Vorrichtung konfiguriert ist, um die festen Bestandteile eines Abfallstroms zu zerkleinern;
wobei der Auslass einer Zerkleinerungsvorrichtung (4) mit einer Trennvorrichtung (26) verbunden ist, zum Trennen von aktuellen Abfallmaterialien und Behältermaterialien von dem zerkleinerten Abfallstrom, wobei eine Reinigungsanlage (10, 30) mit dem Auslass der Trennvorrichtung (26) für das aktuelle Abfallmaterial verbunden ist,
wobei die Trennvorrichtung vorzugsweise einen weiteren Auslass zum Auslassen der Behältermaterialien umfasst, wobei der Auslass mit einer Reinigungsvorrichtung zum Reinigen des getrennten Behältermaterials mit einer Reinigungsflüssigkeit verbunden ist und/oder
wobei die Reinigungsvorrichtung vorzugsweise mit einem ersten Auslass zum Auslassen der gebrauchten Reinigungsflüssigkeit an die Reinigungsanlage (10, 30) und mit einem zweiten Auslass zum Auslassen des getrennten und gereinigten Behältermaterials versehen ist,
wobei vorzugsweise ein Fermenter (28) mit dem zweiten Auslass der Trennvorrichtung für die Behältermaterialien verbunden ist.

## Revendications

1. Procédé de déchiquetage d'un flux de déchets dans un dispositif de déchiquetage comprenant un logement (3), comportant au moins une première entrée destinée à introduire le flux de déchets, une seconde entrée destinée à introduire un liquide additif et au moins une sortie (71) comprenant un conduit de déchargement destiné à décharger le flux de déchets déchiquetés avec le liquide additif à partir du logement, et une unité de déchiquetage, avec au moins un élément de déchiquetage (57), agencée dans le logement afin de déchiqueter le flux de déchets, dans lequel le flux de déchets comprend au moins des constituants solides de même que des constituants liquides, le procédé comprenant la commande de la seconde entrée, de l'élément de déchiquetage (57) et de la sortie (71) de manière à :
- introduire le flux de déchets et le liquide additif dans le logement tout en maintenant le conduit de déchargement fermé dans le but de remplir le logement jusqu'à un niveau suffisamment élevé de manière à ce que l'élément de déchiquetage soit au moins partiellement immergé dans le mélange de constituants liquides, de constituants solides et de liquide additif ;
- ensuite, déchiqueter les constituants solides du flux de déchets avec l'élément de déchiquetage (57) dans l'état au moins partiellement immergé ;
- dès que le flux de déchets a été déchiqueté, ouvrir la au moins une sortie (71) et décharger le flux de déchets depuis le logement vers un réseau d'égout (12).

2. Procédé selon la revendication 1, dans lequel la seconde entrée et le conduit de déchargement sont commandés de manière à ce que l'élément de déchiquetage soit entièrement immergé au cours du déchiquetage.

3. Procédé selon la revendication 1 ou 2, dans lequel, à la suite du déchargement du flux de déchets déchiquetés hors du logement, le procédé consiste en :
- la séparation du flux de déchets déchiquetés en un matériau de déchets réels et un matériau de conteneurs ;
- le transport du matériau de déchets réels séparé vers une installation de purification (10, 30) afin de purifier le matériau de déchets réels séparé ;
- le transport du matériau de déchets réels séparé et purifié vers un réseau d'égout (12).

4. Procédé selon l'une quelconque des revendications précédentes, dans lequel les constituants solides comprennent des conteneurs dans lesquels des constituants liquides sont conservés, le procédé comprenant le déchiquetage des conteneurs en parties de conteneur, dans lequel le déchiquetage en parties de conteneurs comprend, de préférence, le déchiquetage d'un conteneur en parties de conteneurs qui sont de taille inférieure à une valeur maximum prédéterminée, dans lequel la taille de parties de conteneurs est de préférence telle qu'elle permet le transport des parties de conteneurs par l'intermédiaire d'un dispositif formant conduit avec un flux de déchets liquides en tant que support et/ou dans lequel la valeur maximum de la taille de partie de conteneur est, de préférence, égale à 5 cm, plus préférablement, égale à 1 cm, encore plus préférablement, égale à 0,5 cm.

5. Procédé selon l'une quelconque des revendications précédentes, comprenant la détection du niveau de liquide dans le logement (3) et, à un niveau de liquide inférieur à un niveau de liquide minimum prédéterminé, l'alimentation en liquide additif jusqu'à ce qu'au moins le niveau de liquide minimum soit atteint.

6. Procédé selon l'une quelconque des revendications précédentes, dans lequel le dispositif de déchiquetage comprend au moins une unité de déchiquetage (55) agencée dans le logement et comprenant un élément de déchiquetage (57) pouvant être entraîné par l'intermédiaire d'un moteur d'entraînement, et une unité de commande (70) configurée de manière à commander au moins la seconde entrée, le conduit de déchargement et l'unité de déchiquetage (55), le procédé comprenant les étapes de :
- ouverture de la première entrée afin d'introduire une certaine quantité du flux de déchets dans le logement et ouverture de la seconde entrée afin de mélanger le flux de déchets avec de l'eau additionnelle, tout en maintenant le conduit de déchargement fermé ;
- déchiquetage du mélange du flux de déchets et de l'eau additionnelle avec un élément de déchiquetage immergé ; et
- ouverture du conduit de déchargement et déchargement du flux de déchets déchiquetés par la sortie (71) du logement (3).

7. Procédé selon l'une quelconque des revendications précédentes, comprenant l'application des constituants solides du flux de déchets contre l'élément de déchiquetage avec une unité d'application (86), et/ou :
- la détermination du niveau de liquide dans le logement ;
- la comparaison du niveau de liquide à un niveau de liquide minimum, dans lequel le niveau de liquide minimum correspond, de préférence, à un niveau auquel l'élément de déchiquetage est immergé ;
- le déchiquetage du flux de déchets uniquement lorsque le niveau de liquide minimum est atteint.

8. Procédé selon l'une quelconque des revendications précédentes, comprenant l'agitation du flux de déchets et, en variante, le mélange du flux de déchets et du liquide additif, avant, pendant et/ou après le déchiquetage.

9. Procédé selon l'une quelconque des revendications précédentes, dans lequel le flux de déchets comprend un mélange de constituants solides et de constituants liquides, comprenant, en particulier, un premier flux de déchet comprenant au moins principalement des fèces et de l'urine et un second flux de déchet comprenant principalement des produits pharmaceutiques et/ou substances toxiques agencés dans un conteneur à déchiqueter.

10. Dispositif de déchiquetage d'un flux de déchets, dans lequel le flux de déchets comprend, au moins des constituants solides de même que des constituants liquides, le dispositif comprenant :
- un logement (3) comportant au moins une première entrée (51) destinée à introduire le flux de déchets, une seconde entrée (48) destinée à introduire le liquide additif et au moins une sortie (71) destinée à décharger le flux de déchets déchiquetés avec du liquide additif, dans lequel la sortie (71) comprend un conduit de déchargement destiné à décharger le flux de déchets déchiquetés et de liquide additif et est raccordée ou peut être raccordée à un dispositif formant conduit (25) raccordé au réseau d'égout (12) ;
- au moins une unité de déchiquetage (55) agencée dans le logement (3) et comprenant un élément de déchiquetage (57) pouvant être entraîné par l'intermédiaire d'un moteur d'entraînement (63) ;
- une unité de commande (70) configurée de manière à commander au moins la seconde entrée (48), la sortie (71) et l'unité de déchiquetage (55) **caractérisé en ce que** l'unité de commande est configurée de manière à
∘ ouvrir la seconde entrée tout en maintenant le conduit de déchargement fermé afin de remplir le logement à un niveau suffisamment élevé de telle sorte que l'élément de déchiquetage (57) soit au moins partiellement immergé dans le mélange de constituants liquides, de constituants solides et de liquide additif,
∘ ensuite activer l'unité de déchiquetage (55) dans le but de déchiqueter les constituants solides du flux de déchets avec l'élément de déchiquetage (57) dans l'état au moins partiellement immergé ; et
∘ dès que le flux de déchets a été déchiqueté, ouvrir le conduit de déchargement afin de décharger par la sortie (71) du logement (3) le flux de déchets déchiquetés.

11. Dispositif selon la revendication 10, dans lequel l'unité de commande est configurée de manière à ce que l'élément de déchiquetage (57) se trouve dans l'état totalement immergé lorsque l'élément de déchiquetage déchiquette le flux de déchets.

12. Dispositif selon les revendications 10 ou 11, dans lequel la seconde entrée comprend :
- un conduit d'alimentation en liquide additif destiné à délivrer du liquide additif sous pression ;
- un mécanisme de vanne pouvant être commandé par l'intermédiaire de l'unité de commande (70) afin de réguler l'alimentation en liquide additif vers le logement (3).

13. Dispositif selon l'une quelconque des revendications 10 à 12, dans lequel l'unité de déchiquetage (55) comprend un élément de déchiquetage (57) agencé de manière à pouvoir tourner dans le logement, dans lequel l'élément de déchiquetage comprend une saillie (60) destinée à déchiqueter les constituants solides, comprenant, plus préférablement, une unité d'application (86), en particulier, une presse agencée de manière à pouvoir se déplacer dans le logement, afin de presser les constituants solides du flux de déchets contre la surface de l'élément de déchiquetage au cours du déchiquetage.

14. Dispositif selon l'une quelconque des revendications 10 à 13, comprenant une unité de détermination de niveau de liquide destinée à déterminer le niveau de liquide dans le logement (3), dans lequel l'unité de détermination de niveau de liquide est couplée à l'unité de commande (70) afin de commander la seconde entrée et/ou l'unité de déchiquetage (55) en fonction du niveau actuel de liquide dans le logement, comprenant, plus préférablement :
- une unité d'agitation (76) agencée dans le logement afin d'agiter le flux de déchets.

15. Dispositif selon l'une quelconque des revendications 10 à 14, dans lequel le conduit de déchargement comprend un mécanisme de fermeture qui est configuré de manière à être activé par l'intermédiaire de l'unité de commande dans le but d'ouvrir et de fermer la sortie (71).

16. Dispositif (1) destiné à traiter un certain nombre de flux de déchets dans un bâtiment, en particulier, un établissement de soins, un avion ou un terminal d'aéroport, dans lequel un flux de déchets comprend au moins des constituants solides de même que des constituants liquides, dans lequel les constituants solides comprennent des conteneurs dans lesquels des constituants liquides sont contenus, le dispositif comprenant :
- un dispositif formant conduit (25) avec un certain nombre d'entrées (2) destinées à être disposées à différents emplacements dans le bâtiment et raccordées à au moins une sortie vers le réseau d'égout (12) ;
- un ou plusieurs dispositifs (4) selon l'une quelconque des revendications 10 à 15, dans lequel un dispositif est configuré de manière à déchiqueter les constituants solides d'un flux de déchets ;
dans lequel la sortie d'un dispositif de déchiquetage (4) est raccordée à un dispositif de séparation (26) afin de séparer des matériaux de déchets réels et des matériaux de conteneur du flux de déchets déchiquetés, dans lequel une installation de purification (10, 30) est raccordée à la sortie du dispositif de séparation (26) pour le matériau de déchets réels,
dans lequel le dispositif de séparation comprend, de préférence, une autre sortie destinée à décharger les matériaux de conteneurs, laquelle sortie est raccordée à un dispositif de nettoyage afin de nettoyer le matériau de conteneurs séparé avec un liquide de nettoyage, et/ou
dans lequel le dispositif de nettoyage comporte, de préférence, une première sortie destinée à décharger le fluide de nettoyage utilisé vers l'installation de purification (10, 30) et une seconde sortie destinée à décharger le matériau de conteneurs séparé et nettoyé,
dans lequel un dispositif de fermentation (28) est, de préférence, raccordé à la seconde sortie du dispositif de séparation destinée aux matériaux de conteneurs.
